# EUROPEAN PATENT SPECIFICATION

(11) **EP 2 586 841 B1**
(45) Date of publication and mention of the grant of the patent: **04.09.2019**
(21) Application number: 11797644.9
(22) Date of filing: 22.06.2011
(51) Int. Cl.: C09J 123/02, C09J 153/02, C09J 123/08, C08L 23/04, C08L 23/08, C08K 5/01, C08K 5/092

(54) **HOT ADHESIVE FORMULATION FOR ADHERING PLASTIC MATERIALS**
HEISSE KLEBSTOFFFORMULIERUNG ZUM KLEBEN VON KUNSTSTOFFMATERIALIEN
FORMULATION ADHÉSIVE À CHAUD POUR LE COLLAGE DE MATÉRIAUX PLASTIQUES

(30) Priority: 23.06.2010 ES 201000846
(43) Date of publication of application: 01.05.2013
(73) Proprietor: Forest Chemical Group S.L., 03113 Alicante (ES)
(72) Inventor: FERNANDEZ CLIMENTE, Pedro, E-03111 Alicante (ES)
(74) Representative: Martin Alvarez, Juan Enrique
(86) International application number: PCT/ES2011/000214
(87) International publication number: WO 2011/161283

(56) References cited:
- WO-A1-03/033612
- JP-A- 2006 299 023
- US-A- 5 026 752
- US-A- 5 080 978
- US-A1- 2005 054 779
- US-A1- 2009 203 847

## Description

### Object of the Invention

The present invention refers to a hot melt formulation for sticking plastic materials, which provides an excellent combination of adhesive and mechanical properties. The invention's adhesive formulation provides an effective solution for creating joins between plastic substrates such as polyethylene, polypropylene and others, for which up until now it has been necessary to carry out costly surface treatments prior to the sticking process. Additionally, the adhesive formulation of the invention exhibits characteristics which allow it to be applied in industries as diverse as packaging and packing, labelling, textiles, automotive and other industrial assemblies. Another object of the invention consists of providing an adhesive formulation which has excellent adhesive properties at both high temperatures and low temperatures. This formulation consists essentially of a combination of components such as polyolefins, other polymers, tackifying resins and waxes, combined in proportions within specific ranges which allow a formulation with the abovementioned properties to be obtained.

### Background to the invention

Hot melt adhesives are mainly used in industrial fields as varied as those of packaging and packing, textiles, manufacture of labels and adhesive tapes, disposable products (such as babies' nappies, for example), health products, bookbinding, industrial processes for assembling products such as wooden furniture, etc.

Hot melt adhesives have a wide application and perform particularly well when sticking porous substrates and those with surface polarity, as in the case of the different papers used in cardboard packaging. However, a hot melt adhesive is not in itself able to create a join when sticking substrates with no porosity and no polarity. In this case, prior surface treatments must be applied.

Plastic materials such as polypropylene constitute substrates which are more complicated to join because of the absence of porosity on their surface, which prevents the adhesive penetrating and developing physical anchor points on the substrate and, in particular, because of their absence of polarity. Polarity in a chemical bond means that the shared electrons in a chemical bond are attracted by one of the two atoms with the most force, creating a partially negative charge on this atom and a partially positive charge on the other. This generates a dipole between the two bodies, which is particularly predisposed to creating a bond with other chemical species by electrostatic attraction between the bonding electrons.

Polypropylene is a material which is formed of long saturated chains of carbon atoms in such a way that it has no polar groups like halogens, carbonyls, amino groups or unsaturations. This prevents the establishment of covalent or partially ionic bonding forces between the adherent and the substrate because there are no distributions of charge (dipoles). At most, Van der Waals type bonding forces, which are weak, may be established.

For these reasons, in order to create strong and lasting bonds between two substrates of polypropylene, it is necessary to carry out a surface treatment prior to the sticking process. This consists of degrading or eroding the surface to create irregularities on it, thereby promoting the appearance of physical anchor points, or generating the appearance of functional groups and charge distributions to create the appearance of chemical anchor points.

In the case of polypropylene, the surface treatments usually used are exposing it to:
- Corona discharge
- UV treatments (exposure to ultraviolet radiation using lamps)
- Ultrasound treatments
- Flame treatment

Surface treatments present obvious drawbacks, such as low production yields, high costs (particularly in the case of corona discharges and exposure to UV radiation) and the health and safety risks inherent in flame treatment.

The adhesive formulations currently existing on the market for sticking polypropylene and polyethylene-based substrates form weak adhesive bonds which lose their adhesion over time and with the process of crystal rearrangement; in other words, when the molecules forming the adhesive layer are reordered as a result of crystallisation through cooling, the adhesive/substrate interface becomes very weak and the bonding forces are so weak that a false sticking effect is produced. For these reasons it will be understood that there is a need in the current state of the art, which the invention is designed to meet by providing an adhesive capable of creating strong and lasting bonds between substrates of polypropylene with no need for prior treatment. This supposes great progress in plastic materials technology and makes it possible to develop other industrial applications in which the difficulty of creating bonds between apolar plastic materials constitutes a brake on the development of the sector. The adhesive formulation developed by this invention is designed to be extended to other sectors, like the automotive industry, for example, in which the current trend is to replace metal with other plastic components, such as polypropylene, because they are much lighter and can be moulded into complex shapes.

To this effect, the adhesive formulation which is the subject of this invention develops bonding forces in such a way that the bond between the substrates remains long-lasting. The adhesive formulation of this invention has a low viscosity and short open time, which makes it applicable on packaging production lines, providing strong and lasting bonds with no need for prior surface treatments on the polypropylene substrates to be bonded. Another of the objectives of this invention consists of making the formulation as inexpensive as possible, to facilitate its commercialisation. In addition, another of the purposes of the invention is to ensure that the adhesive joins have the best heat resistance and good flexibility at low temperatures, so that the joins do not become brittle at low temperatures.

Document ES-2084346 refers to hot melt adhesives which include especially co-polymers of ethylene/α-olefin in which the α-olefin can have from 3 to 20 carbon atoms, and co-polymers of ethylene/butene-1, ethylene/ hexane-1/ ethylene/ octene-1, and ethylene/ octet-1 and ethylene/propylene. These co-polymers of ethylene with prescribed intervals of co-monomer can be prepared using polymerisation of the appropriate olefins in the presence of supported or unsupported catalyst systems containing metallocene.

Document ES-2179232 refers to an SIS-based adhesive formulation which can only be applied to labelling.

Document ES-2096346 refers to adhesives comprising two or more copolymers of ethylene-α-olefin with 3-20 carbon atoms, such as copolymers of ethylene/butene-1, ethylene/hexene-1, ethylene/octene-1 and ethylene/4-methylpentene-1. These ethylene copolymers with prescribed co-monomcr range levels can be prepared by polymerisation of the appropriate olefins in the presence of cyclopentadienyl-transition metal compounds, supported or unsupported, and reactive organoaluminium or non-coordinating anion catalyst systems.

Document US patent application number 742254 refers to the preparation of a certain class of polymers of poly(esteramides)which are particularly suitable as hot melt adhesive compositions which are particularly advantageous for bonding plastics, such as polyester or polycarbonate polymers.

In document US5747573, on the formation of plastic containers, formulations with amorphous polyalphaolefins and a solid plasticiser like benzoates are used to improve their heat resistance.

Document US5512625 refers to the use of mixtures of amorphous and crystalline polyalphaolefins to improve the heat resistance.

In document US5041492, mixtures of amorphous polyalphaolefins, waxes and plasticisers are used to try and obtain a good adhesion in substrates of polypropylene for the automotive industry.

In document US-20080264562, mixtures of metallocene polypropylenes, resins and waxes are used with a semicrystalline polymer as an additive to promote adhesion.

In document ES-2162210, mixtures of amorphous polyalphaolefins and copolymers of ethylene/n-butyl acrylate are used to obtain adhesives particularly suitable for the wood sector. In document US5080978, mixtures of an amorphous poly(vinylmethylether) and a thermoplastic resin which is an ethylene vinylacetate copolymer are used.

### Summary of the Invention

As stated in the present description, the objective of this invention consists of developing a formulation which can solve the problems existing in the current state of the art, related to sticking plastic materials, by providing a hot melt adhesive capable of forming strong bonds between apolar plastic substrates. Another objective of this invention is for these bonds to have good resistance to both high and low temperatures, while at the same time maintaining good flexibility. In addition, another purpose of this invention is to make the adhesive as inexpensive as possible and perfectly applicable to industrial production lines. Finally, the last objective of this invention is to obtain a type adhesive formulation which can be modified in terms of the additives used, to obtain hot melt adhesives with the physical characteristics required for each application, but always creating a strong bond.

To meet the objectives described above, this invention has developed an adhesive formulation with excellent adhesion at room temperature, excellent heat resistance at high temperatures, and good flexibility at low temperatures so that it does not become brittle. The adhesive formulation of the invention uses the following combination:
- 10-70% of amorphous polyalphaolefins;
- 5-30% of another polymer;
- 10-55% of a tackifying resin or a mixture of tackifying resins;
- 0-20% of waxes;
- 0-30% of other additives such as plasticisers and/or antioxidants, and
- malonic acid in a concentration of up to 5%.

The formulations according to the invention have the following properties:
a) They can be applied using conventional application methods between 150-200 °C;
b) They have an open time of between 5-35 seconds:
c) They maintain acceptable bond strengths, preferably in the 0°-75 °C temperature range;
d) They have a ring and ball softening point of between 100-140 °C, and
e) They have a viscosity preferably between 6000 - 15000 mPas at 190 °C, measured with a Brookfield viscometer with the 27 ring.

### Detailed description of the invention

The adhesive formulation developed by the invention has between 10-70% of an amorphous polyalphaolefin, preferably between 20-70% of this amorphous polyalphaolefin. The amorphous polyalphaolefins, commonly called APAO, come from low pressure polymerisation of ethene, propene and 1-butene as monomers, using a Ziegler process. These polymers are predominantly amorphous, which is why they are known as APAO amorphous polyalphaolefins. Polyalphaolefins are the most suitable polymers for bonding apolar substrates like polypropylene substrates, but their disadvantage is their high degree of crystallinity, which makes the bonds very rigid and fragile, particularly at low temperatures. There is also increased slow cohesion, which is negative for industrial assembly processes which require short set-times. Amongst the commercially available references, the most favourable are Vestoplast®, made by Evonik. Within these, the most recommended are those with molecular weights by mass M_{w} between 34000 and 118000, or molecular weights by Mₙ number between 7300-23800 g/mol.

The adhesive formulation of the invention includes between 5-30% of another hot melt polymer or copolymer, which should preferably be chosen from amongst the group consisting of:
- Ethylene/vinyl/acetate
- ethylene/methyl/acrylate
- Styrene/isoprene/styrene
- Styrene/butene/isoprene
- Isotactic polypropylene, sindiotactic polypropylene
- polypropylene and amorphous polyethylenes.

The polymers are the skeleton of the adhesive and give it its properties of viscosity, flexibility, cohesion and its tensile strength. Of all these polymers, the most widely used for hot melt adhesive formulations is ethylene/vinyl/acetate. Ethylene/vinyl/acetate (commercially known as EVA), is a copolymer formed by monomer units of ethylene, vinyl and acetate. The acetate group provides the polymer with polarity, which is a positive feature for applications in which the substrates to be joined have a polarity, like paper or cardboard, but has a counter-productive effect when the substrates to be joined are not polar, like polypropylene. In addition, adhesives formulated with EVA have a low heat resistance. Examples of commercial products are Elvax®, distributed by Dupont, Evatanne® distributed by Arkema, and Alcudia® products distributed by Repsol.

Rubbers like SIS and SBS are elastomers and are characterised by their low glass transition temperature, which gives them flexibility at low temperatures. For this reason they are used for the formulation of pressure sensitive adhesives which develop weak bonding forces, and which have their greatest application in the labelling industry. These polymers are interesting as a second polymer to modify properties in case of applications requiring good flexibility at low temperatures, but they do not offer good cohesive strength as the service temperature increases. Commercial examples of these are Dynasol rubbers, commercialised under the names Calprene® and Solprene®.

The ethylene/acrylates are polymers with properties similar to those of the EVAs but with much lower glass transition temperatures; for this reason they are especially recommended for applications requiring flexibility of the adhesive bond at low temperatures. The drawback of these polymers is essentially the same as in the case of EVAs, i.e. the negative effect of the polarity when it comes to creating adhesive bonds on materials with no surface polarity. Commercial examples of these polymers are the Elvaloy® range by Dupont and the Lotryl® range by Arkema.

On the basis of the above, it can be understood that it is necessary to mix polymers, in percentages such as those described above and exemplified later, as required to create a good balance of properties between adhesion, flexibility at low temperatures and open time.

Another of the elements involved in the adhesive formulation of this invention is constituted by the tackifying resins which provide stickiness when hot, reduce the viscosity and, consequently, improve the wettability of the adhesive on the substrate and increase the softening of the adhesive, improving its properties at high temperature. The preferred resins used are:
- Derivatives of colophony such as esters of colophony.
- Resins of linear and aromatic hydrocarbons, either pure or a mixture of the two.
- Terpenic or terpenophenolic resins.
- Phenolic resins.
- Coumarone-indene resins.

The problems which may arise with resins are problems of compatibility with the existing polymers in the formulation, which produces a separation of phases in the formulation and, consequently, a considerable reduction in the mechanical properties of the adhesive. Another of the aspects to be monitored when selecting the resins and their quantities is that they increase the glass transition temperature of the adhesive formulation, thereby increasing the degree of crystallinity, which may create brittle and fragile bonds which are not very strong. Finally, the high degree of polarity of the resins must be considered, as this may create a negative effect when forming bonds with non-polar substrates. The usual percentages of the resins in hot melt adhesive formulations vary between 10-55%. The resins currently on the market include colophonies like Silvatac® and the Silvalyte® range made by Arkema, and the Recmol® range made by Remsa. Amongst the hydrocarbon-derivative partially or totally hydrogenated synthetic resins are the Arkon® resins made by Arakawa and the Kristalex® resins by Eastman.

Another of the elements of the invention's adhesive formulation are the waxes, the percentage of which varies between 0-20% in the formulations. Waxes regulate the adhesive open time, i.e. they control the solidification speed of the adhesive. This means that the type and quantity of wax in the adhesive is fundamental for controlling the applicability on an industrial level on production lines with a fast rhythm. Waxes also reduce the viscosity and increase the softening of the adhesive depending on the melting point of the waxes used in the formulation and the quantity. The preferred types of waxes for the formulation of hot melt adhesives are:
- Paraffin waxes
- Microcrystalline waxes
- Polyethylene waxes
- Fischer-Tropsch type waxes

The problems associated with waxes are the high degree of crystallinity they bring to the adhesive formulation and, consequently, they can cause the adhesive layer to be fragile and brittle, creating weak bonds. Another problem associated with the correct choice of wax is the compromise between appropriate regulation of the open time so that the adhesive formulation can be adapted to the industry's automated production lines, and a suitable heat resistance which does not lead to the fragility effect described above.

In addition, in the adhesive formulation of the invention there are other components to be taken into account, such as:

### Antioxidant Additives:

Antioxidants are necessary in the adhesive formulation of the invention because they prevent heat degradation of the adhesive, something which is especially important given that the application temperatures are 160-190 °C and the long time spent by the hot melt adhesive in the heated application tank accelerates thermal decomposition.

### Plasticising additives, rheology modifiers, etc.

In the additives category, both liquid and solid plasticisers are particularly useful additives for making the adhesive flexible and improving its performance at low temperatures. Plasticisers are molecules which prevent the polymer chains from moving closer during the crystallisation process of the adhesive: this distance between molecules minimises the adhesive's internal attraction properties and makes it possible for the adhesive to deform rather than breaking when effort is applied. Some of the most commonly used plasticisers are derivatives of polybutylene.

Another of the components of this adhesive formulation of the invention is malonic acid. Malonic acid is a dicarboxylic acid with the formula: 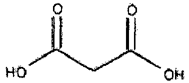 used in the adhesive formulation as an additive, in the 0-5% range, to carry out a surface treatment on the surface of the substrate to be joined, creating the anchor points necessary for good bonding. Adhesion is based on 2 types of forces: van der Waals forces and chemical bonds. Van der Waals forces are the basis of adhesion. These forces of attraction act between the adhesive and the substrate. Meanwhile, chemical bonds produce the strongest type of adhesion. These forces are developed when the substrate has chemical groups which react with the adhesive, which is not the case for the plastic substrates covered by this invention.

Some chemical groups are notable for their ability to form van der Waals bonds. These groups can improve adhesion when they are present in the adhesive or in the substrate. The following table includes these groups in approximate descending order of adhesion properties.

| **Group** | **Van der Waals attraction** |
|---|---|
| Organic acid | High |
| Nitryl | High |
| Amide | High |
| Hydroxyl | Intermediate |
| Ester | Intermediate |
| Acetate | Intermediate |
| Chloride | Intermediate |
| Ether | Low |
| Ethylene | Low |

Polymers which have low adhesion properties can be improved with the addition of a small percentage of an organic acid or acrylonitrile. In the case of the present invention, malonic acid is used to improve the adhesion of the formulations contained in it.

The components of the adhesive formulations are mixed in a double-walled stainless steel mixer, with a Cowles-type stirrer.

The applied test methods are:
Viscosity: Viscosity measured using a Brookfield-type RVT viscometer with the 27 ring at 190 °C.
Softening point: Softening point using the ring and ball method according to ASTM E28.
Adhesion: Adhesion was measured against time, i.e. counting the time taken until the false adhesion effect described above occurs, if it occurs at all. The specimens are polypropylene test tubes. The unsticking is carried out manually and the bond is considered poor if, an hour after sticking, there is an adhesion failure; it is considered fair if at least three hours elapse; and it is considered good if twelve hours elapse with no adhesion failure or if it cannot be unstuck. The tests were carried out in triplicate and the bonds were conditioned at 20 °C, 4 °C and -2 °C. In addition to subjecting the formulations which are the subject of this invention to test, comparative tests were carried out with two adhesives currently available on the market.

The practice of the invention is illustrated in the examples included in the following table.

| **Raw material** | **Ex. 1** | **Ex. 2** | **Ex. 3** | **Ex. 4** | **Ex. 5** | **Ex. 6** | **Ex. 7** | **Ex. 8** | **Ex. 9** | **Ex. 10** |
|---|---|---|---|---|---|---|---|---|---|---|
| Vestoplast 708 | 15 | 15 | 15 | 20 | 15 | 15 | 20 | 20 | 20 | 15 |
| Vestoplast | 15 | 15 | 15 | 0 | 15 | 10 | 5 | 5 | 5 | 10 |
| Vestoplast | 20 | 20 | 20 | 35 | 20 | 25 | 25 | 25 | 25 | 25 |
| PA 446 | 13 | 13 | - | - | - | - | - | - | - | - |
| PA 443 | - | - | 13 | 13 | - | - | - | - | - | - |
| Elvax 410 | - | - | - | - | 13 | 13 | 18 | 15 | 12 | 15 |
| Arkon M 100 | 21, 5 | 21 | 21 | 26 | 21 | 21 | 21 | 21 | 21 | 21 |
| Recmol 100E | 10 | 10 | 10 | - | 10 | 10 | 5 | 5 | 5 | 5 |
| LP 1040P | 5 | 5 | 5 | 5 | 5 | 5 | 5 | 5 | 5 | 5 |
| Daelim PB 450 | - | - | - | - | - | - | - | 3 | 6 | 3 |
| Malonic acid | - | 0,5 | 0,5 | 0,5 | 0,5 | 0,5 | 0,5 | 0,5 | 0,5 | 0,5 |
| BHT | 0,5 | 0,5 | 0,5 | 0,5 | 0,5 | 0,5 | 0,5 | 0,5 | 0,5 | 0,5 |
| Adhesion 20 °C | Poor | Good | Fair | Good | Good | Good | Good | Good | Good | Good |
| Adhesion: 4 °C | Poor | Poor | Poor | Poor | Poor | Poor | Poor | Good | Good | Good |
| Adhesion: -2 °C | Poor | Poor | Poor | Poor | Poor | Poor | Poor | Fair | Good | Good |

The examples in the table above show how the addition of malonic acid improves the adhesion of the adhesive formulations. Meanwhile, it shows how a suitable combination of the APAOs and another thermoplastic polymer, in this case EVA, improves the adhesion and the cohesion of the adhesive. Finally, it can also be seen how the adhesion and the cohesion of the adhesive at low temperatures can be improved by adding the appropriate concentrations of plasticiser, in this case Daelim®.

## Claims

1. A hot-melt adhesive having:
- a viscosity between 6000-15000 mPas at 190°C;
- softening point of between 100-140°C measured using the Ring and Ball method according to ASTM E28
- an open time of between 5-35 seconds;
- an application temperature of 150-200°C
comprising:
- 10-70% of amorphous polyalphaolefins;
- 5-30% of another polymer selected from:
∘ ethylene / vinyl acetate,
∘ ethylene / methyl acrylate,
∘ styrene/ isoprene / styrene,
∘ styrene / butane / isoprene,
∘ isotactic polypropylene,
∘ syndiotactic polypropylene,
∘ amorphous polypropylene, and
∘ amorphous polyethylene,
- 10-55% of a tackifying resin or a mixture of tackifying resins;
- 0-20% of waxes;
- 0-30% of other additives such as plasticizers and/or antioxidants and
- malonic acid,
**characterized in that** the concentration of malonic acid is up to5%.

2. A bonded structure comprising the formulation of claim 1 and a solid substrate of polypropylene.

## Patentansprüche

1. Heißschmelzkleber aufweisend:
- eine Viskosität von zwischen 6000-15000 mPas bei 190ºC;
- einen Erweichungspunkt von zwischen 100-140ºC, gemessen unter Verwendung des Ring- und Kugel-Verfahrens nach ASTM E28;
- eine offene Zeit von zwischen 5-35 Sekunden;
- eine Auftragstemperatur von 150-200ºC;
welcher Folgendes umfasst:
- 10-70% amorpher Polyalphaolefine;
- 5-30% eines anderen Polymeren ausgewählt aus:
• Ethylen/Vinyl/Acetat,
• Ethylen/Methylacrylat,
• Styrol/Isopren/Styrol,
• Styrol/Butan/Isopren,
• isotaktischem Polypropylen,
• syndiotaktischem Polypropylen,
• amorphem Polypropylen und
• amorphem Polyethylen,
- 10-55% eines klebrigmachenden Harzes oder einer Mischung aus klebrigmachenden Harzen;
- 0-20% Wachse;
- 0-30% anderer Zusatzstoffe wie Weichmacher und/oder Antioxidantien und
- Malonsäure,
**dadurch gekennzeichnet, dass** die Konzentration von Malonsäure bis zu 5% beträgt.

2. Verbundstruktur umfassend die Formulierung aus Anspruch 1 und ein festes Substrat aus Polypropylen.

## Revendications

1. Colle thermofusible ayant:
- une viscosité allant de 6000 à 15000 mPas à 190ºC ;
- un point de ramollissement allant de 100 à 140ºC mesuré en utilisant le procédé bille et anneau selon ASTM E28
- un temps ouvert allant de 5 à 35 secondes ;
- une température d'application allant de 150 à 200ºC,
comprenant :
- entre 10 et 70% de polyalphaoléfines amorphes ;
- entre 5 et 30% d'un autre polymère choisi parmi :
∘ éthylène-acétate de vinyle,
∘ éthylène-acrylate de vinyle,
∘ styrène-isoprène-styrène,
∘ styrène-butane-isoprène,
∘ polypropylène isotactique,
∘ polypropylène syndiotactique
∘ polypropylène amorphe, et
∘ polyéthylène amorphe,
- entre 10 et 55% d'une résine poisseuse ou un mélange de résines poisseuses ;
- entre 0 et 20% de cires ;
- entre 0 et 30% d'autres additifs tels que des plastifiants et/ou des antioxydants et
- de l'acide malonique,
**caractérisée en ce que** la concentration d'acide malonique atteint jusqu'à 5%.

2. Structure de liaison comprenant la formulation de la revendication 1 et un substrat solide de polypropylène.
